# EUROPÄISCHE PATENTSCHRIFT

(11) **EP 2 203 659 B1**
(45) Veröffentlichungstag und Bekanntmachung des Hinweises auf die Patenterteilung: **22.06.2011**
(21) Anmeldenummer: 07818355.5
(22) Anmeldetag: 24.09.2007
(51) Int. Cl.: F16D 66/02

(54) **SCHEIBENBREMSE, INSBESONDERE FÜR EIN NUTZFAHRZEUG**
DISC BRAKE, IN PARTICLAR FOR A UTILITY VEHICLE
FREIN À DISQUE, EN PARTICULIER POUR UN VÉHICULE UTILITAIRE

(43) Veröffentlichungstag der Anmeldung: 07.07.2010
(73) Patentinhaber: KNORR-BREMSE Systeme für Nutzfahrzeuge GmbH, 80809 München (DE)
(72) Erfinder: HELF, Anton, 83139 Söchtenau (DE)
(74) Vertreter: Mattusch, Gundula
(86) Internationale Anmeldenummer: PCT/EP2007/008267
(87) Internationale Veröffentlichungsnummer: WO 2009/039868

(56) Entgegenhaltungen:
- EP-A- 0 492 143
- EP-A- 1 519 157
- WO-A-2007/140985
- DE-A1- 19 817 356
- DE-A1-102005 053 303
- DE-B3-102006 042 777

## Beschreibung

Die Erfindung betrifft eine Scheibenbremse, insbesondere für ein Nutzfahrzeug entsprechend dem Oberbegriff des Anspruchs 1.

Um das zwischen der Bremsscheibe und dem Bremsbelag in Nichtfunktionsstellung des Bremsbelages vorhandene, auch als Arbeitshub zu bezeichnende Lüftspiel konstant zu halten, d.h., um einen Verschleißhub, der durch einen Abtrag eines Reibbelages des Bremsbelages beim Bremsen entsteht auszugleichen, ist eine bekannte Scheibenbremse zumindest zuspannseitig mit einer Nachstelleinrichtung versehen, die üblicherweise zwei über eine gemeinsame Antriebskette synchron drehbare und damit axial verschiebbare Stellspindeln aufweist.

Zur Erkennung des Bremsbelagverschleißes kommen Einrichtungen zum Einsatz, die aus einem mit einer der beiden Stellspindeln verbundenen Untersetzungsgetriebe und einem damit verbundenen Belagverschleißsensor bestehen. Eine solche Einrichtung ist aus der gattungsbildenden DE 93 12 119 U1 bekannt.

Darin wird vorgeschlagen, als Belagverschleißsensor einen Drehwinkelsensor einzusetzen, der als Drehpotentiometer ausgebildet ist. Über eine angeschlossene Auswerteeinrichtung ist beispielsweise für den Fahrer des Nutzfahrzeuges der Zustand des Bremsbelages erkennbar.

Die Stellung des Bremsbelages zur Positionierung des Belagverschleißsensors muss, um eine exakte Anzeige zu erhalten, sehr genau eingehalten werden, so dass eine sorgfältige und präzise Montage erforderlich ist. Dies ist naturgemäß nur mit einem erheblichen Fertigungsaufwand möglich, der einer rationellen Fertigung der Scheibenbremse insgesamt entgegensteht.

Darüber hinaus ist ein Austausch eines defekten Belagverschleißsensors ebenfalls nur mit erheblichem Aufwand möglich, insbesondere hinsichtlich der Positionierung des Belagverschleißsensors zum Bremsbelag bzw. zur Stellung des Untersetzungsgetriebes. Ein Austausch des Belagverschleißsensors kann daher nur von entsprechend geschultem Personal durchgeführt werden, was den Forderungen hinsichtlich der Senkung der Betriebskosten jedoch entgegensteht.

In der EP 0 492 143 A1 ist eine Scheibenbremse geoffenbart, die, entgegen der Gattung, kein an der Stellspindel angeschlossenes Untersetzungsgetriebe aufweist. Dort ist ein Belagverschleißsensor vorgesehen, dessen Geber durch ein Nachstellelement, bevorzugt eine Stellspindel gebildet wird.

Die nachveröffentlichte WO 2007/140985 A1 zeigt und beschreibt eine Scheibenbremse mit einem Belagverschleißsensor und einem Untersetzungsgetriebe, wobei der Geber als Magnet an dem Untersetzungsgetriebe angeschlossen ist und in Korrespondenz mit einem Hallsensor steht.

Der Erfindung liegt die Aufgabe zugrunde, eine Scheibenbremse der gattungsgemäßen Art so weiterzuentwickeln, dass sie einfacher und kostengünstiger zusammenbaubar ist und dass deren Belagverschleißsensor problemlos austauschbar ist.

Diese Aufgabe wird durch eine Scheibenbremse mit den Merkmalen des Anspruchs 1 gelöst.

Durch diese konstruktive Ausbildung ist eine bauliche Trennung von Belagverschleißsensor und Untersetzungsgetriebe gegeben, d.h., beide sind nicht mehr körperlich miteinander verbunden.

Dies hat eine ganze Reihe von Vorteilen zur Folge, insbesondere ist die Erfindung mit geringem Aufwand zu verwirklichen.

So besteht die Möglichkeit einer automatisierten Montage, da das Untersetzungsgetriebe, die Kette und die jeweils auf die Stellspindeln aufsteckbaren Kettenräder praktisch als Baueinheit zusammengefasst und montiert werden können, während anschließend der Verschlussdeckel lediglich aufzustülpen und mit dem Bremssattel zu verschrauben ist. Danach erfolgt die Befestigung des Belagverschleißsensors an der Außenseite des Verschlussdeckels, wobei das Untersetzungsgetriebe und der Belagverschleißsensor bevorzugt durch eine Wandung des Verschlussdeckels getrennt sind.

Hierdurch wird eine Abkapselung des Untersetzungsgetriebes und der Kette gegenüber dem Außenbereich erreicht. Ohne Eingriff auf das Untersetzungsgetriebe kann so der Belagverschleißsensor montiert bzw. demontiert werden, wobei durch den Belagverschleißsensor im Zusammenspiel mit dem Geber, der ebenfalls durch den Verschlussdeckel abgedeckt ist, je nach Stellung des Gebers der Verschleiß des Bremsbelages erkennbar ist.

Voraussetzung hierfür ist allerdings, wie bereits aus dem Stand der Technik bekannt, dass das Untersetzungsgetriebe, beispielsweise in Form eines Planetengetriebes, so ausgelegt ist, dass eine Drehung des Gebers über den gesamten Verschleißhub nicht mehr als 360°, vorzugsweise 300° vollführt. D.h., während die Stellspindel, um den maximalen Verschleißhub auszugleichen, beispielsweise sieben Umdrehungen vollführt, dreht sich der Geber nur einmal um maximal 300°.

Um eine störungsfreie Korrespondenz zwischen dem Geber und dem Belagverschleißsensor zu gewährleisten, liegt der Geber spielfrei an der Wandung des Verschlussdeckels an, während der Belagverschleißsensor sich spaltfrei an der gegenüberliegenden Seite der Wandung abstützt.

Bevorzugt wird der Geber federbelastet an die Wandung des Verschlussdeckels angedrückt, wozu in einem Hohlrad des Planetengetriebes eine Druckfeder angeordnet ist, die sich andererseits an einem Planetenträger abstützt.

Auf dem Hohlrad ist verdrehsicher ein Mitnehmerrad gehalten, in dem der Geber befestigt ist.

Durch die Anordnung der Druckfeder im Hohlrad wird eine äußerst geringe Bauhöhe des Untersetzungsgetriebes insgesamt erreicht, was der Forderung nach einer kompakten Bauform der Scheibenbremse entgegenkommt.

Als berührungsloser Sensor kann der Belagverschleißsensor unterschiedlich in Bauart bzw. Funktionsprinzip sein. So kann die Funktionseinheit berührungsloser Sensor/Geber beispielsweise auf magnetischer Basis bzw. induktiv funktionieren. Denkbar ist auch den berührungslosen Sensor im Sinne eines Transponders auszubilden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer erfindungsgemäßen Scheiben- bremse in einer teilweise geschnittenen Draufsicht

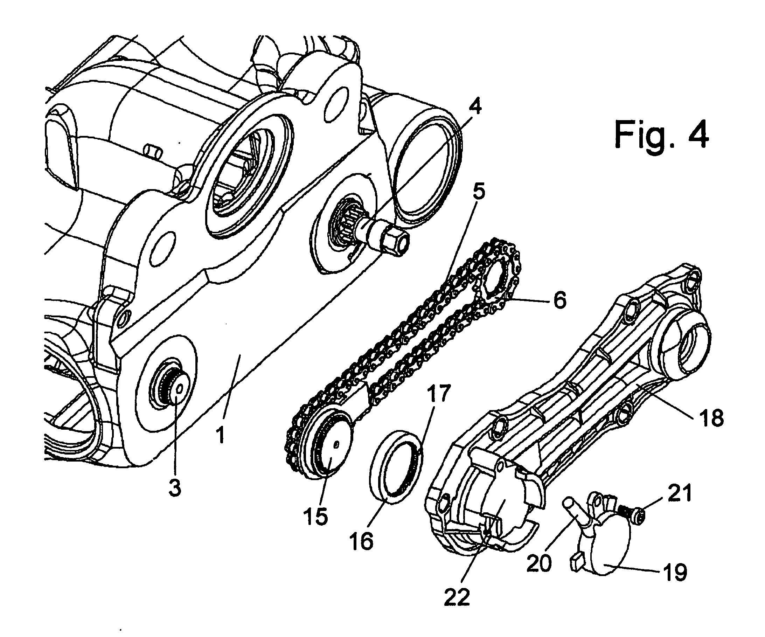

- Figuren 2 - 4: jeweils einen Teilausschnitt einer erfindungsgemäßen Scheiben- bremse in unterschiedlichen Montagestellungen, jeweils in einer Explosivdarstellung
- Figur 5: einen Teilausschnitt einer Scheibenbremse in einer geschnittenen Draufsicht.

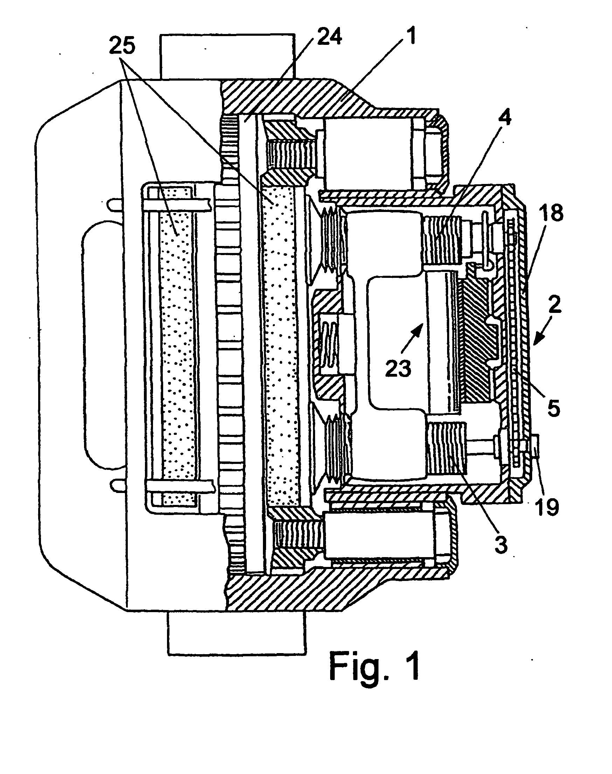

In der Figur 1 ist eine Scheibenbremse, insbesondere für ein Nutzfahrzeug dargestellt, mit einem eine Bremsscheibe 24 übergreifenden Bremssattel 1, beidseitig der Bremsscheibe 24 angeordneten und diese bei einer Bremsung kontaktierenden Bremsbelägen 25, einer Zuspanneinrichtung 23, mit der der zuspannseitige Bremsbelag 25 gegen die Bremsscheibe 24 pressbar ist, wobei der Anpressdruck von zwei Stellspindeln 3, 4 von der Zuspanneinrichtung 23 auf den Bremsbelag 25 übertragen wird, sowie einer Nachstelleinrichtung 2, mit der eine verschleißbedingte Änderung eines Lüftspiels zwischen dem Bremsbelag 25 und der Bremsscheibe 24 im wesentlichen ausgleichbar ist. Dabei ist die Nachstelleinrichtung 2 verdrehfest an einer Stellspindel 3 angeordnet.

Für eine synchrone Verstellung der Stellspindeln 3, 4 zum Ausgleich eines Verschleißhubes, sind diese über einen Kettenantrieb miteinander gekoppelt, der aus Kettenrädern 6, 7, die verdrehsicher mit der zugeordneten Stellspindel 3, 4 verbunden sind und einer Kette 5 besteht

Die Nachstelleinrichtung 2 ist gegenüber der Umgebung durch einen Verschlussdeckel 18 abgedeckt, der mit dem Bremssattel 1 verschraubt ist. Weiter weist die Scheibenbremse einen mit einem an der Stellspindel 3 angeschlossenen Untersetzungsgetriebe korrespondierenden Belagverschleißsensor 19 auf. Da die Funktionsweise der Scheibenbremse an sich bekannt ist, wird auf deren Beschreibung verzichtet bzw. auf die in der Beschreibungseinleitung erwähnte DE 93 12 119 U1 verwiesen.

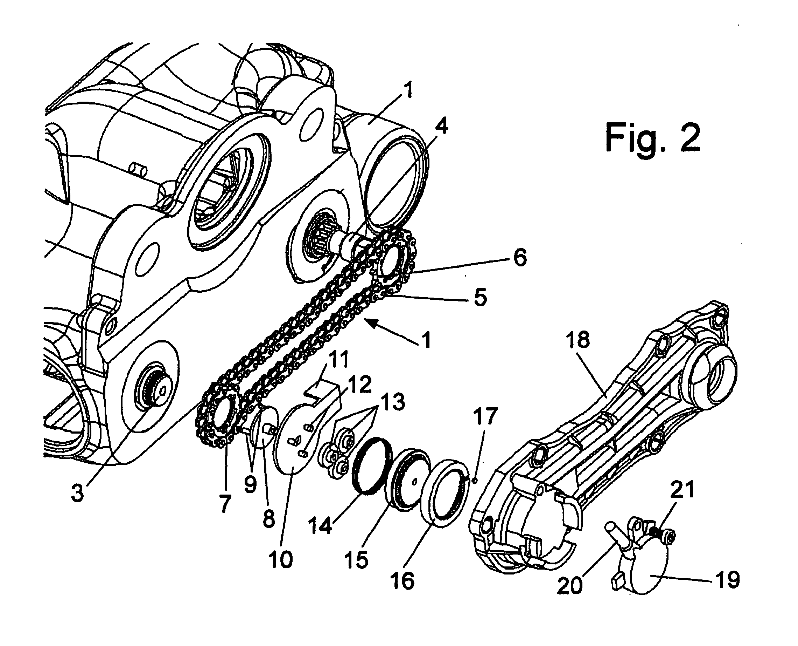

Das Untersetzungsgetriebe ist als Planetengetriebe ausgebildet und weist ein Sonnenrad 8 auf, das axial ausgerichtete Rastarme 9 aufweist, mit denen das Sonnenrad 8 an dem der Stellspindel 3 zugeordneten Kettenrad 7 befestigbar ist, wobei die Figur 2 eine Montagestellung wiedergibt, in der sämtliche Bauteile außer Funktion dargestellt sind.

Das Sonnenrad 8 wird also zunächst mit dem Kettenrad 7 durch Verclippsen verdreh- und axial gesichert verbunden, wobei die Rastarme 9 in entsprechende Ausnehmungen des Kettenrades 7 eingreifen. Statt dessen kann das Sonnenrad 8 auch direkt mit der Stellspindel 3 verdrehsicher verbunden sein, bspw. über eine steckbare Verzahnung.

Auf das Sonnenrad 8 wird ein Planetenradträger 10 aufgesetzt, der mit seitlich sich zu den Trums der Kette 5 erstreckenden Flügeln 11 versehen ist, an denen sich diese Trums abstützen. Der Planetenradträger 10 weist drei axial sich erstreckende Drehzapfen 12 auf, auf die jeweils ein Planetenrad 13 aufgesteckt wird. Darauf wird ein Hohlrad 15 aufgesetzt, das mit den Planetenrädern 13 korrespondiert.

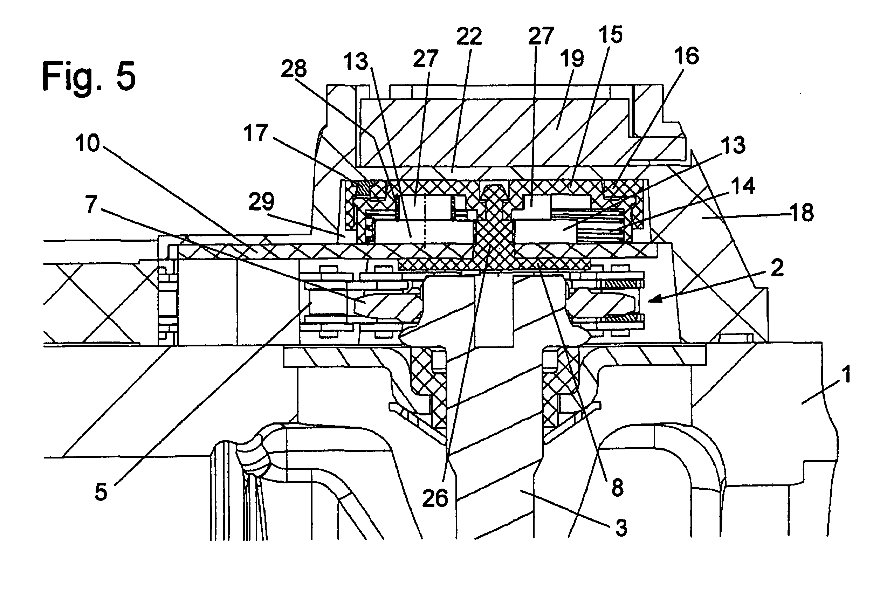

Zur Drehmomentenübertragung der Stellspindel 3 ist, wie die Figur 5 sehr deutlich zeigt, ein Drehzapfen 26 des Sonnenrades 8 mit einer Außenverzahnung versehen, in die die Verzahnungen der stufenförmig ausgebildeten Planetenräder 13 mit ihrem größeren Durchmesser eingreifen, während der Abtrieb über einen im Durchmesser kleineren, ebenfalls mit einer Außenverzahnung versehenen Ansatz 27 erfolgt, der in Zähne eingreift, die an der konzentrischen Umfangsfläche 28 einer Ausnehmung des Hohlrades 15 vorgesehen sind.

Auf das Hohlrad 15 ist verdrehfest ein Mitnehmerrad 16 aufgesetzt, das im Außenrandbereich einen mit dem Belagverschleißsensor 19 korrespondierenden Geber 17 aufweist.

Das Hohlrad 15, die Planetenräder 13 sowie das Mitnehmerrad 16 sind in einer Aufnahmekammer 29 des Verschlussdeckels 18 platziert, die einerseits von einer Wandung 22 der Verschlussplatte 18 und gegenüberliegend vom Planetenradträger 10 begrenzt ist.

Die Wandung 22 bildet eine räumliche Trennung vom Geber 17 bzw. dem Untersetzungsgetriebe insgesamt und dem Belagverschleißsensor 19, der erfindungsgemäß als berührungsloser Sensor ausgebildet ist und der mittels einer Schraube 21 verdrehsicher am Verschlussdeckel 18 gehalten ist. Die Befestigung des Belagverschleißsensors 19 am Verschlussdeckel 18 erfolgt bspw. mittels eines Bajonettverschlusses.

Zur Funktionssicherheit des Systems Geber 17/Belagverschleißsensor 19 muss der Geber 17 spielfrei an der Wandung 22 anliegen, wozu in dem Hohlrad 15 eine Druckfeder 14 angeordnet ist, mit der das Hohlrad 15 und damit das Mitnehmerrad 16 und der darin befestigte Geber 17 gegen die Wandung 22 gepresst werden.

Zur Verdrehsicherung des Mitnehmerrades 16 auf dem Hohlrad 15 weisen beide ineinander greifende Formschlussmittel auf, vorzugsweise Verzahnungen.

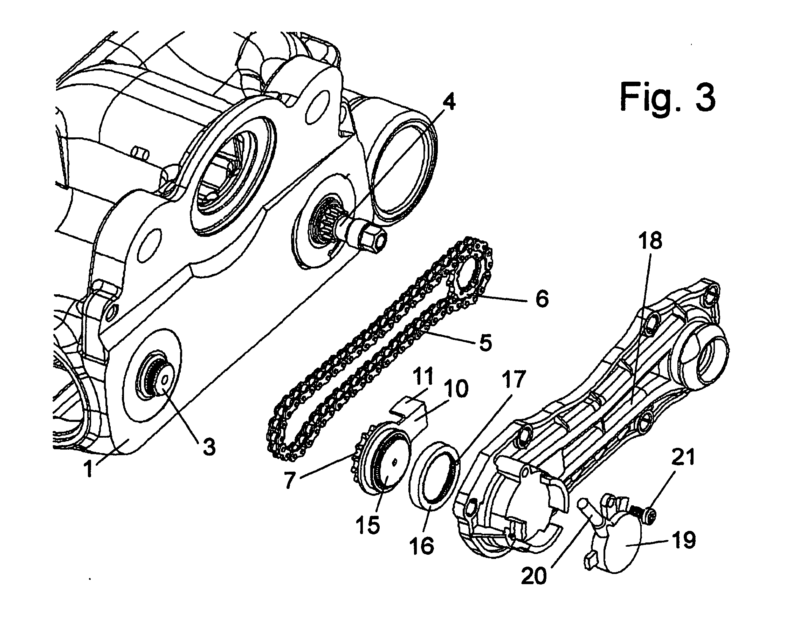

In der Figur 3 ist dargestellt, dass das Kettenrad 7, der Planetenradträger 10, die Planetenräder 13, das Sonnenrad 8, die Druckfeder 14 und das Hohlrad 15 zu einer Baueinheit zusammengefügt sind, über die die Kette 5 gelegt ist, ebenso wie über das andere Kettenrad 6.

Die so vormontierte Einheit ist auf die Stellspindeln 3, 4 aufsetzbar, wobei diese durch Verzahnungen formschlüssig mit den zugeordneten Kettenrädern 6, 7 verdrehsicher verbunden werden.

Danach erfolgt ein Aufsetzen des Verschlussdeckels 18 und dessen Befestigung am Bremssattel 1, vorzugsweise durch Verschrauben. Schließlich wird der Belagverschleißsensor 19 außenseitig in den Verschlussdeckel 18 eingesetzt, daran befestigt und über einen Kabelanschluss 20 mit einer Auswerteeinrichtung verbunden, mittels der eine veränderte Winkelstellung des Gebers 17 erkennbar ist.

### Bezugszeichenliste

- 1: Bremssattel
- 2: Nachstelleinrichtung
- 3: Stellspindel
- 4: Stellspindel
- 5: Kette
- 6: Kettenrad
- 7: Kettenrad
- 8: Sonnenrad
- 9: Rastarme
- 10: Planetenträger
- 11: Flügel
- 12: Drehzapfen
- 13: Planetenrad
- 14: Druckfeder
- 15: Hohlrad
- 16: Mitnehmerrad
- 17: Geber
- 18: Verschlußdeckel
- 19: Belagverschleißsensor
- 20: Kabelanschluss
- 21: Schraube
- 22: Wandung
- 23: Zuspanneinrichtung
- 24: Bremsscheibe
- 25: Bremsbelag
- 26: Zapfen
- 27: Ansatz
- 28: Umfangsfläche
- 29: Aufnahmekammer

## Patentansprüche

1. Scheibenbremse, insbesondere für ein Nutzfahrzeug,
- mit einem eine Bremsscheibe (24) übergreifenden Bremssattel (1),
- mit Bremsbelägen (25), die die Bremsscheibe (24) in Funktionsstellung kontaktieren,
- einer Zuspanneinrichtung (23), mit der über mindestens eine Stellspindel (3, 4) einer der Bremsbeläge (25) gegen die Bremsscheibe (24) pressbar ist,
- einer verdrehfest an der Stellspindel (3, 4) angeschlossenen Nachstelleinrichtung (2), mit der eine verschleißbedingte Änderung eines Lüftspiels zwischen dem Bremsbelag (25) und der Bremsscheibe (24) im wesentlichen ausgleichbar ist,
- einem die Nachstelleinrichtung (2) abdeckenden, am Bremssattel (1) befestigten Verschlussdeckel (18) und
- einem mit einem an der Stellspindel (3) angeschlossenen Untersetzungsgetriebe korrespondierenden Belagverschleißsensor (19),
**dadurch gekennzeichnet, dass**
an dem aus einem Planetengetriebe bestehenden Untersetzungsgetriebe ein sich auf einer konzentrischen Bahn drehender Geber (17) angeschlossen ist, der mit dem als berührungslosem Sensor ausgebildeten Belagverschleißsensor (19) korrespondiert, durch den eine Veränderung der Winkelstellung des Gebers (17) erkennbar und an eine Auswerteinrichtung übermittelbar ist, wobei der Geber (17) direkt oder indirekt an einem Hohlrad (15) des Planetengetriebes befestigt ist.

2. Scheibenbremse nach Anspruch 1, **dadurch gekennzeichnet, dass** ein Sonnenrad (8) des Planetengetriebes verdrehgesichert an einem Kettenrad (7) der Nachstelleinrichtung (2) befestigt ist.

3. Scheibenbremse nach Anspruch 1 oder 2, **dadurch gekennzeichnet, dass** das Sonnenrad (8) Rastarme (9) aufweist, die in daran angepasste Ausnehmungen des Kettenrades (7) eingreifen.

4. Scheibenbremse nach einem der vorhergehenden Ansprüche, **dadurch gekennzeichnet, dass** das Untersetzungsgetriebe und der Belagverschleißsensor (19) durch eine Wandung (22) des Verschlussdeckels (18) getrennt sind.

5. Scheibenbremse nach einem der vorhergehenden Ansprüche, **dadurch gekennzeichnet, dass** der Geber (17) federbelastet an der Wandung (22) des Verschlussdeckels (18) anliegt.

6. Scheibenbremse nach einem der vorhergehenden Ansprüche, **dadurch gekennzeichnet, dass** der Geber (17) in einem Mitnehmerrad (16) angeordnet ist, das mit dem Hohlrad (15) verbunden ist.

7. Scheibenbremse nach einem der vorhergehenden Ansprüche, **dadurch gekennzeichnet, dass** in dem Hohlrad (15) eine Druckfeder (14) angeordnet ist, die die Baueinheit Hohlrad (15)/Mitnehmerrad (16) gegen die Wandung (22) des Verschlussdeckels (18) drückt.

8. Scheibenbremse nach einem der vorhergehenden Ansprüche, **dadurch gekennzeichnet, dass** ein Planetenradträger (10) des Planetengetriebes zwei parallel und abständig zueinander verlaufende Flügel (11) aufweist, zur Abstützung der Trums der Kette (5).

9. Scheibenbremse nach einem der vorhergehenden Ansprüche, **dadurch gekennzeichnet, dass** das Übersetzungsgetriebe, die Kettenräder (6, 7) und die Kette (5) als Baueinheit vormontiert auf die Stellspindeln (3, 4) aufsteckbar sind.

## Claims

1. Disc brake, in particular for a commercial vehicle, comprising
- a brake calliper (1) which engages a brake disc (24) form above,
- brake pads (25) which contact the brake disc (24) in the operating position,
- a brake application device (23) with which one of the brake pads (25) can be pressed against the brake disc (24) via at least one actuation spindle (3, 4),
- an adjustment device (2) which is connected in a rotationally fixed manner to the actuation spindle (3, 4) and with which a wear-induced change in a clearance between the brake pad (25) and the brake disc (24) can be substantially compensated,
- a cover (18) which covers the adjustment device (2) and is fastened to the brake calliper (1), and
- a pad wear sensor (19) communicating with a reduction gear mechanism connected to the actuation spindle (3),
**characterised in that**
there is connected to the reduction gear mechanism, which is represented by a planetary gear train, a transmitter (17) revolving on a concentric path and communicating with the pad wear sensor (19), which is configured as a contactless sensor and by means of which a change in the angular position of the transmitter (17) can be detected and transmitted to an evaluation device, the transmitter (17) being directly or indirectly secured to an internal gear (15) of the planetary gear train.

2. Disc brake according to claim 1, **characterised in that** a sun gear (8) of the planetary gear train is secured in a rotationally fixed manner to a sprocket (7) of the adjustment device (2).

3. Disc brake according to claim 1 or 2, **characterised in that** the sun gear (8) has locking arms (9) which engage matching recesses of the sprocket (7).

4. Disc brake according to any of the preceding claims, **characterised in that** the reduction gear mechanism and the pad wear sensor (19) are separated by a wall (22) of the cover (18).

5. Disc brake according to any of the preceding claims, **characterised in that** the transmitter (17) is spring-loaded against the wall (22) of the cover (18).

6. Disc brake according to any of the preceding claims, **characterised in that** the transmitter (17) is located in a driver gear (16) which is connected to the internal gear (15).

7. Disc brake according to any of the preceding claims, **characterised in that** a compression spring (14) which pushes the assembly internal gear (15)/driver gear (16) against the wall (22) of the cover (18) is provided in the internal gear (15).

8. Disc brake according to any of the preceding claims, **characterised in that** a planet carrier (10) of the planetary gear train has two wings (11) disposed parallel to and at a distance from one another in order to support the strand of the chain (5).

9. Disc brake according to any of the preceding claims, **characterised in that** the gear mechanism, the sprockets (6, 7) and the chain (5) can be fitted to the actuation spindles (3, 4) as a pre-assembled unit.

## Revendications

1. Frein à disque, notamment pour un véhicule utilitaire,
- comprenant un étrier (1) de frein chevauchant un disque (24) de frein,
- comprenant des garnitures (25) de frein, qui, en position de fonctionnement, sont en contact avec le disque (24) de frein,
- un dispositif (23) de serrage, par lequel l'une des garnitures (25) de frein peut, par l'intermédiaire, d'au moins une broche (3, 4) de réglage, être pressée sur le disque (24) de frein,
- un dispositif (2) de rattrapage de jeu, qui est raccordé sans torsion à la broche (3, 4) de réglage, et par lequel une modification due à l'usure d'un jeu entre la garniture (25) de frein et le disque (24) de frein peut être compensée pour l'essentiel,
- un couvercle (18) de fermeture recouvrant le dispositif (2) de rattrapage de jeu et fixé à l'étrier (1) de frein et
- un capteur (19) d'usure de garniture, correspondant à une transmission de démultiplication, raccordé à la broche (3) de réglage,
**caractérisé en ce que**
à la transmission de démultiplication, constituée d'un engrenage planétaire, est raccordé un indicateur (17) tournant sur une trajectoire concentrique, qui correspond au capteur (19) d'usure de garniture, qui est constitué sous la forme d'un capteur sans contact, et par lequel une modification de la position angulaire de l'indicateur (17) peut être détectée et peut être transmise à un dispositif d'exploitation, l'indicateur étant fixé directement ou indirectement à une couronne (5) de la transmission planétaire.

2. Frein à disque suivant la revendication 1, **caractérisé en ce qu'**une roue (8) soleil de la transmission planétaire est fixée sans possibilité de torsion à une roue (7) à chaîne du dispositif (2) de rattrapage de jeu.

3. Frein à disque suivant la revendication 1 ou 2, **caractérisé en ce que** la roue (8) soleil a des bras (9) d'encliquetage, qui pénètrent dans des évidements qui y sont adaptés de la roue (7) à chaîne.

4. Frein à disque suivant l'une des revendications précédentes, **caractérisé en ce que** la transmission de démultiplication et le capteur (19) d'usure de la garniture sont séparés par une paroi (22) du couvercle (18) de fermeture.

5. Frein à disque suivant l'une des revendications précédentes, **caractérisé en ce que** l'indicateur (17) s'applique en étant soumis à l'action d'un ressort à la paroi (22) du couvercle (18) de fermeture.

6. Frein à disque suivant l'une des revendications précédentes, **caractérisé en ce que** l'indicateur (17) est monté dans une roue (16) d'entraîneur, qui est reliée à la couronne (15).

7. Frein à disque suivant l'une des revendications précédentes, **caractérisé en ce que**, dans la couronne (15), est monté un ressort (14) de compression, qui repousse l'unité de construction couronne (15)/roue (16) d'entraîneur sur la paroi (22) du couvercle (18) de fermeture.

8. Frein à disque suivant l'une des revendications précédentes, **caractérisé en ce qu'**un support (10) de roue planétaire de la transmission planétaire a deux ailes (11) parallèles et s'étendant à distance l'une de l'autre, pour l'appui du brin de la chaîne (5).

9. Frein à disque suivant l'une des revendications précédentes, **caractérisé en ce que** la transmission de démultiplication, les roues (6, 7) à chaîne et la chaîne (5) peuvent être enfilées sur les broches (3, 4) de réglage en étant prémontées sous la forme d'une unité de construction.
